# EUROPÄISCHE PATENTANMELDUNG

(11) **EP 0 997 726 A2**
(43) Veröffentlichungstag der Anmeldung: **03.05.2000**
(21) Anmeldenummer: 99119335.0
(22) Anmeldetag: 29.09.1999
(51) Int. Cl.: G01N 21/53

(54) **Nephelometrische Detektionseinheit mit optischer In-Prozess-Kontrolle**

(30) Priorität: 28.10.1998 DE 19849597
(71) Anmelder: Dade Behring Marburg GmbH, 35001 Marburg (DE)
(72) Erfinder: Meller, Paul, Dr., 61273 Wehrheim (DE)

(57) **Zusammenfassung**

Die vorliegende Erfindung bezieht sich auf das Gebiet des Einsatzes von automatisierten Meßsystemen in der Analytik und in der in-vitro Diagnostik. Insbesondere wird durch die beschriebene Vorrichtung eine automatische Qualitätskontrolle und Validierung verfahrenstechnischer und insbesondere optischer Kenngrößen während der Messung von Streulichtsignalen ermöglicht.

## Beschreibung

Die vorliegende Erfindung bezieht sich auf das Gebiet des Einsatzes von automatisierten Meßsystemen in der Analytik und in der in-vitro Diagnostik. Insbesondere wird durch die beschriebene Vorrichtung eine automatische Qualitätskontrolle und Validierung verfahrenstechnischer und insbesondere optischer Kenngrößen während der Messung von Streulichtsignalen ermöglicht.

In den letzten Jahren entwickelte sich eine zunehmende Nachfrage nach empfindlichen optischen Detektionsverfahren, die in vollautomatisierten Analysegeräten der Labordiagnostik eingesetzt werden können.

Neben den Anforderungen an die Methode der Messung, wie Empfindlichkeit, Auflösung oder dynamischer Bereich werden durch den hohen Grad an Automatisierung in gleicher Weise auch Anforderungen an die automatisierte Prüfung, Einstellung und gegebenenfalls Nachregelung der Parameter der eingesetzten Meßmethode gestellt. Qualitätskontrolle und Validierungsmaßnahmen müssen daher ebenfalls durch automatisierte Verfahren sichergestellt werden.

Bei den verschiedenen Methoden der Analytik ist die Prüfung und Sicherung valider Ergebnisse durch unterschiedliche Schwierigkeitsgrade gekennzeichnet. Während in der Absorptionsspektroskopie die Prüfung zum Beispiel durch Verwendung amtlich kalibrierter Standards möglich ist, wird dies für Verfahren der Streulichtspektroskopie nicht angeboten. Insbesondere bei der Methode der Vorwärtslichtstreuung, die Winkel oder Winkelbereiche nahe des einfallenden Strahls der Lichtquelle nutzt, ist eine gleichzeitige Messung optischer Kenngrößen innerhalb des Strahlengangs aufgrund des mechanischen Aufbaus schwierig. Daher lassen sich optische Kenngrößen, wie Intensität, Wellenlänge, Pulslänge oder Rauschanteil der verwendeten Lichtquelle und unter Verwendung eines kurzzeitig in den Strahlengang eingesetzten Gefäßes zur Meßgutaufnahme (Küvette o.ä.) häufig nur mit Hilfe eines zusätzlichen relativen Standards ermitteln. Aufgrund der Notwendigkeit des Einsatzes von nichtstandardisierten Prüfmedien aber ergeben sich weitere Fehlerquellen, die eine Kontrolle über einen längeren Zeitraum in-situ und einen eindeutigen Rückschluß auf die Eigenschaft der apparativen Bedingungen nicht ermöglichen.

Bei Streulichtgeräten werden für Referenzmessungen in den meisten Fällen hochreine Lösungen, wie z.B. Toluol eingesetzt. Durch Messung der winkelabhängigen Streulichtcharakteristik ergibt sich ein Profil und damit ein Qualitätsmaß für die eingesetzte Apparatur.

Die Verwendung derartiger Flüssigkeiten ist einerseits aus Sicherheitsgründen problematisch, andererseits ist die Durchführung der oben beschriebenen Messungen labortechnisch aufwendig und zeitintensiv. Aus diesen Gründen sind diese Verfahren für den Einsatz in automatisierten Analysegeräten nicht verwendbar. Ohne ein entsprechendes streulichterzeugendes Meßgut läßt sich andererseits kein Meßsignal erzeugen und damit kein Rückschluß auf die Güte des Verfahrens unter den laufenden Betriebsbedingungen ziehen.

Verwendet man somit ein streulichterzeugendes Meßgut, so wird dieses in Abhängigkeit seiner Zusammensetzung, seiner Struktur und der Verfahrensweise des Einsatzes ein von Messung zu Messung unterschiedliches Signal erzeugen. Damit ist eine gleichzeitige Validierung des Meßsystems ausgeschlossen.

In ähnlicher Weise treffen diese Überlegungen auch auf Verfahren zu, in denen die Meßsignale erst innerhalb des Meßguts erzeugt werden, wie beispielsweise bei Fluoreszenz- oder Chemolumineszenzreaktionen.

In der zumeist verwendeten Anordnung zur Streulichtmessung wird das gestreute Licht unter einem Winkelbereich um 90 ° zur Richtung des einfallenden Strahls erfaßt. Dadurch läßt sich eine Trennung des einfallenden Lichts zu dem gestreuten Licht besonders leicht erreichen. Andererseits können durch Wahl eines größeren Raumwinkelbereichs und unter Ausnutzung von Winkeln oder Winkelbereichen um die Vorwärtsrichtung des einfallenden Lichts höhere Intensitäten des Streulichts erreicht werden, wodurch sich eine Anordnung technisch einfacher und kostengünstiger aufbauen läßt. Gerade für die gemäß der vorliegenden Beschreibung angestrebten Messungen an organischen Makromolekülen für den Einsatz in der humanen in-vitro Diagnostik ist der Anteil an Streulicht bei Winkeln um die Vorwärtsrichtung besonders hoch. Zusätzlich macht man sich den Effekt der Erhöhung der Intensität des gestreuten Lichts durch das Prinzip der Partikelverstärkung zunutze. Für den Fall, daß die Streupartikel eine Größenordnung aufweisen, die der Größenordnung der Wellenlänge des einfallenden Lichts entspricht, ist die Abhängigkeit des Streusignals von der Partikelgröße am günstigsten. Dadurch ergibt sich eine bevorzugte Anordnung, die es ermöglicht diese Anteile für die Messung auszunutzen. Grundlegende Betrachtungen und Berechnungen zur Theorie des Streulichts sind in den entsprechenden Lehrbüchern enthalten. Beispielsweise seien hier genannt H.C. van de Hulst (Light Scattering by Small Particles, Dover Publications, Inc. New York, 1957, 1981) und C.F. Bohren, D. R. Huffman (Absorption and Scattering of Light by Small Particles, J. Wiley & Sons, Yew York, 1983). Bei weiterer Kenntnis der Eigenschaften des zu untersuchenden Meßguts läßt sich durch Wahl eines oder mehrerer Winkelbereiche eine Diskriminierung des Meßguts in Größenklassen erreichen.

Die in der automatisierten Labordiagnostik eingesetzten Geräte sind häufig aus, dem Fachmann an sich bekannten, bewegbaren Einheiten (z. B. Rack, Karussell, Rotor o.ä.) zur Aufnahme einer Vielzahl von Gefäßen für Proben- oder Reagenzflüssigkeiten und den Gefäßen zur Aufnahme und Durchführung des Meßguts (Küvetten) aufgebaut. Für den Fall der Verwendung einer drehbaren Einheit für die Positionierung des Meßguts, werden die Küvetten in Abhängigkeit ihrer Anforderungen an die Meßaufnahme, zyklisch an einer ortsfesten Position der Meßeinheit vorbeigeführt. Bei der Durchführung von Streulichtmessungen wird das resultierende Streulicht durch das in den Strahlengang eingebrachte Meßgut einer Küvette erzeugt. Dadurch können sich Änderungen durch unterschiedliche Positionierung des Meßguts ergeben.

Es ist daher für die Kontrolle der Intensität des durch das Meßgut erzeugten Streulichts vorteilhaft, die Position der Küvette zu kontrollieren. Diese Möglichkeit wird erfindungsgemäß durch die unabhängige Kontrolle des Aufbaus der Meßeinheit (Strahlengang) einschließlich der Kontrolle der Art , Aufbau und Position der Küvette ohne Verwendung eines streulichterzeugenden Meßguts erreicht. Die dadurch ermittelte Position kann zur Synchronisation des Meßsignals herangezogen werden.

Der vorliegenden Erfindung lag somit die Aufgabe zugrunde, ein Verfahren zu finden, das die Kontrolle der Eigenschaften eines Verfahrens zur Messung von Vorwärtslichtstreuung ohne den notwendigen Einsatz eines streulichterzeugenden Meßguts ermöglicht.

Es wurde nun gefunden, daß diese Aufgabe durch eine Anordnung der Meßeinheit gelöst wird, bei der das direkt transmittierte Licht durch eine geeignete Detektionsvorrichtung gemessen und gleichzeitig das erzeugte Streulicht erfaßt wird.

Zu diesem Zweck wurde ein Aufbau entwickelt, der es ermöglicht, das unter Winkeln außerhalb von 0° erzeugte Streulicht und das unter Winkeln um 0° transmittierte Licht zu messen.

Insbesondere ist es ein Ziel des beschriebenen Verfahrens, die Kontrolle und Validierung des Strahlengangs und der eingesetzten Komponenten, wie der Lichtquelle, der optischen Komponenten von Linsen und Blenden und der durch die bewegten Aufnahmegefäße des Meßguts (Küvetten) hervorgerufenen Eigenschaften durchzuführen. Für die nur während eines Meßintervalls sich im Strahlengangs befindliche Küvette ist ebenfalls eine Prüfung und Kontrolle möglich.

Die erfindungsgemäß beschriebene Anordnung kann somit als In-Prozeß-Kontrolle in der automatisierten Analytik eingesetzt werden.

Die Anordnung der erfindungsgemäßen Vorrichtung wird anhand der folgenden Abbildungen verdeutlicht:
- Abb. 1:: Prinzip der bisherigen Analyseverfahren
- Abb. 2:: Aufbau mit Erfassung des durchgehenden und gestreuten Lichts
- Abb. 3:: Aufbau der Streulichtblende
- Abb. 4:: Position der Detektionseinheit innerhalb eines Küvettenrads
- Abb. 5:: Schematische Darstellung der Intensität des gestreuten (I) und transmittierten (E) Signals in Abhängigkeit von der Küvettenposition (x).

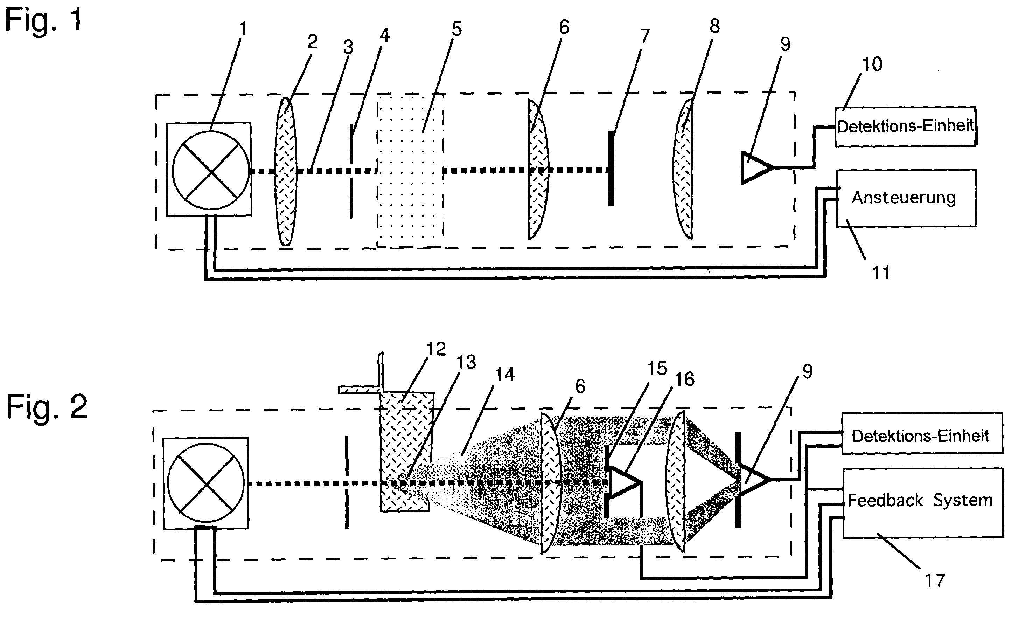

Abbildung 1 zeigt schematisch das Prinzip des bisherigen Verfahrens: Ein von einer Lichtquelle 1, 11 ausgehender Lichtstrahl 3 trifft nach Durchgang durch ein Linsensystem 2, eine oder mehrere Blenden 4 den Meßraum 5; nach Durchgang durch ein Linsensystem 6 trifft das direkt transmittierte Licht der Lichtquelle 1 auf eine Blende 7, die als Lichtfalle wirkt. Das nicht durch Blende 7 gelöschte Licht wird durch ein Linsenssystem 8 auf den Detektor 9 abgebildet und mittels 10 gemessen.

Abbildung 2 zeigt eine erfindungsgemäße Erweiterung des Verfahrens. Wird gemäß Abbildung 1 an die Position 5 ein Aufnahmegefäß 12 mit einem streulichterzeugenden Meßgut 13 positioniert, das der Meßstrahl 3 durchdringt, so wird in Abhängigkeit des Meßgut eine charakteristische, winkelabhängige Streulichtverteilung 14 erzeugt. Diese wird durch die Apertur des Linsensystems 6 und 8 erfaßt und auf den Detektor 9 geführt. Das in den Bereich der Blende 15 auftreffende Licht wird durch einen weiteren Detektor 16 erfaßt und ebenfalls gemessen. Dieser Anteil setzt sich aus dem Anteil des direkt auffallenden Lichts der Lichtquelle und bei Anwesenheit eines streulichterzeugenden Meßguts aus dem, unter dem Öffnungswinkel des Detektors festgelegten, auftreffenden Streulicht zusammen.

Soll für eine Küvette 12 eine bestimmte Intensität an 16 erreicht werden, so kann diese durch die Messung der Intensität ohne streulichterzeugendes Meßgut über das Rückkopplungs-System 17 erfaßt und nachgeregelt werden. Dadurch ergibt sich die Möglichkeit die Streulichtmessungen bei jeweils konstanten Intensitätsbedingungen durchführen zu können.

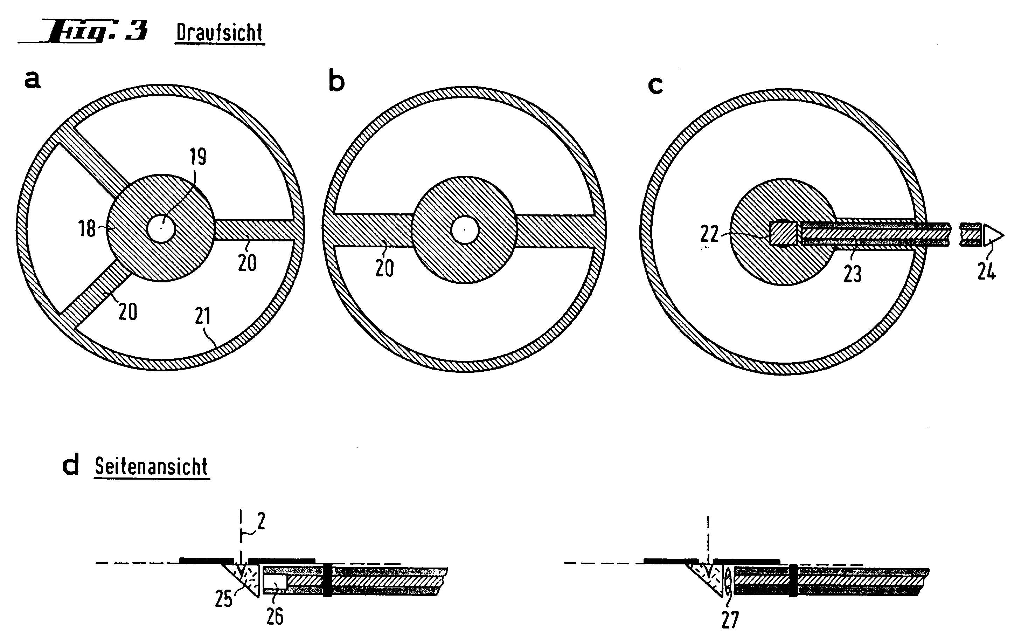

Mögliche Ausgestaltungen der Blende 15 zeigen Beispiele in Abbildung 3 a-c. Die Draufsichten in Abb. 3 a-c umfassen die Blende 15 mit äußeren Haltering 21, einer Ringblende 18 und einen oder mehrere Stege 20 zur Halterung von 18.

Die innere Blende 18 ist als Lochblende zum Durchlaß des direkt transmittierten Strahlanteils ausgebildet. Sie kann weitere Halterungen zur Strahlumlenkung und Einkopplung des Lichts in einen Glasstab oder Lichtwellenleiter 23 und einen an deren Ende befindlichen Detektor 24 aufweisen.

Abbildung 3 d-e zeigt Blende 15 in einer Seitenansicht. Der Meßstrahl 2 wird mit Hilfe einer Strahlumlenkung 15 und einer speziellen Optik 26,27 in eine Lichtführungseinheit 23 eingekoppelt. Die Detektion kann örtlich von dieser Einheit getrennt erfolgen.

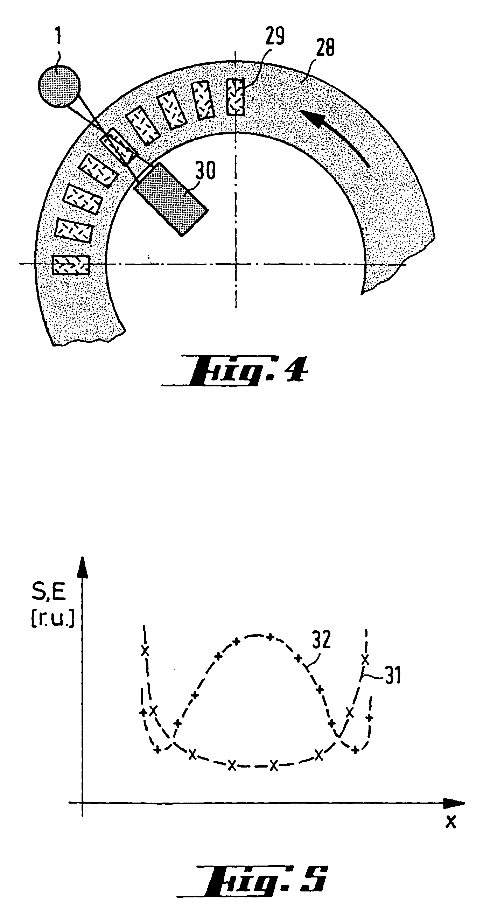

Abbildung 4 zeigt schematisch den Einbau einer Detektionseinheit innerhalb einer drehbaren Halterung (Rotorsystem) 28 zur Aufnahme der Küvetten 29. Bei Drehung des Rotors durch die Positionen 1,30 erfolgt eine zyklische Messung, deren Intervall durch die Geschwindigkeitsparameter des Rotors festgelegt sind. Im Falle des Meßprinzips nach Abbildung 1, kann ein Signal nur dann gemessen und ausgewertet werden, wenn sich ein streulichterzeugendes Meßgut in der Küvette befindet.

Abbildung 5 gibt den prinzipiellen Verlauf der durch Extinktion E oder Streuung S erzeugtenSignale in Abhängigkeit der Küvettenposition wieder. Art, Zusammensetzung und Position der Küvette haben dabei einen großen Einfluß auf die Höhe und Kurvenform des Meßsignals. Während die Streulichtkurve 32 nur mit einem entsprechenden Meßgut erzeugt werden kann, läßt sich die Kurve des durch Extinktion erzeugten Anteils E auch bei leeren oder mit einem nicht-streuenden Meßgut gefüllten Küvetten messen, womit sich eine unabhängige Bestimmung der Position erreichen läßt.

Das erfindungsgemäße Verfahren ist von grundsätzlicher Bedeutung und kann für jedwede Streulichtmessung eingesetzt werden. Die Streulichtmessung von biologischen Makromolekülen zur Konzentrationsbestimmung in dem sogenannten nephelometrischen Verfahren ist von besonderer Bedeutung.

## Patentansprüche

1. Verfahren zur Durchführung einer Streulichtmessung, wobei die optische Strahlführung so eingerichtet ist, daß die Intensität der gestreuten und der transmittierten Anteile des Lichtes separat gemessen werden.

2. Verfahren gemäß Anspruch 1, dadurch gekennzeichnet, daß die Trennung des gestreuten und des durchgehenden Anteils des einfallenden Lichts durch eine speziell geformte Blende erfolgt.

3. Verfahren gemäß Anspruch 1 und 2 dahingehend aufgebaut, daß die Blende einen Bereich zur Aufnahme eines Detektors oder zur Aufnahme einer Strahlführung oder -umlenkung aufweist.

4. Verfahren gemäß Anspruch 1, dadurch gekennzeichnet, daß die Trennung des gestreuten und des durchgehenden Anteils des einfallenden Lichts durch einen in den Strahlengang eingesetzten speziell aufgebauten Spiegel mit der Aufnahme einer Strahlführungs oder -umlenkungseinheit erfolgt.

5. Verfahren gemäß Anspruch 1, dadurch gekennzeichnet, daß die Trennung des gestreuten und der durchgehenden Anteils des einfallenden Lichts durch eine in den Strahlengang eingesetzte speziell bearbeitete Linse mit gleichzeitiger Aufnahme einer Blende und Strahlführung oder -Umlenkungseinheit erfolgt.

6. Verfahren gemäß Anspruch 1 dadurch gekennzeichnet, daß der Detektor zur Messung der Intensität des transmittierten Anteils mit zusätzlichen wellenlängenselektiven Komponenten ausgestattet ist.

7. Verfahren gemäß Anspruch 1 bis 6 , dadurch gekennzeichnet, daß die Messung der Signale der gestreuten und der durchgehenden Anteile sowohl zeitlich getrennt, als auch gleichzeitig erfolgt.

8. Verfahren gemäß Anspruch 1 bis 5, dadurch gekennzeichnet, daß eine Nachregelung der Intensität der Lichtquelle durch das von der Lichtquelle direkt durchgehende Licht erfolgt.

9. Verfahren gemäß Anspruch 1 bis 5, dadurch gekennzeichnet, daß eine Einstellung, Prüfung und gegebenenfalls Korrektur der Position eines sich durch den Meßstrahl bewegten Gefäßes zur Aufnahme von Meßgut erfolgt, in der Weise, daß durch schrittweises Abtasten eines Gefäßes während seiner Bewegung durch den Meßstrahl das transmittierte Signal in Abhängigkeit der Position dieses Gefäßes aufgenommen und zur Festlegung der Position des Aufnahmegefäßes relativ zum Meßstrahl herangezogen wird.

10. Verfahren gemäß Anspruch 1 bis 9, dadurch gekennzeichnet, daß der Einsatz des Verfahrens als In-Prozeß-Kontrolle zur Validierung in diagnostischen Analyseautomaten verwendet werden kann.

11. Verfahren gemäß Anspruch 1 bis 9 zur Verwendung in der Analytik.

12. Verfahren gemäß Anspruch 1 bis 9 zur Verwendung in der in-vitro Diagnostik.
